# EUROPEAN PATENT SPECIFICATION

(11) **EP 3 656 807 B1**
(45) Date of publication and mention of the grant of the patent: **04.09.2024**
(21) Application number: 18835368.4
(22) Date of filing: 15.05.2018
(51) Int. Cl.: C08J 5/24, C08J 5/04, B29B 15/12

(54) **UNIDIRECTIONALLY-ORIENTED TAPE-SHAPED PREPREG, AND MOLDED ARTICLE THEREOF**
UNIDIREKTIONAL AUSGERICHTETES BANDFÖRMIGES PREPREG UND FORMKÖRPER DARAUS
PRÉIMPRÉGNÉ SOUS FORME DE BANDE À ORIENTATION UNIDIRECTIONNELLE, ET ARTICLE MOULÉ À PARTIR DE CELUI-CI

(30) Priority: 18.07.2017 JP 2017138723; 29.03.2018 JP 2018064032
(43) Date of publication of application: 27.05.2020
(73) Proprietor: Toray Industries, Inc., Tokyo 103-8666 (JP)
(72) Inventor: YAMADA, Mayuka, Nagoya-shi Aichi 455-8502 (JP); KONNO, Eita, Nagoya-shi Aichi 455-8502 (JP); UEDA, Taito, Nagoya-shi Aichi 455-8502 (JP)
(74) Representative: Mewburn Ellis LLP
(86) International application number: PCT/JP2018/018751
(87) International publication number: WO 2019/017057

(56) References cited:
- EP-A1- 3 521 345
- WO-A1-2012/002417
- WO-A1-2013/147257
- WO-A1-2015/046290
- WO-A1-2015/122500
- WO-A1-2016/142781
- JP-A- 2005 161 797
- JP-A- 2013 159 675
- JP-A- 2014 105 310
- JP-A- H07 227 840
- JP-A- H11 114 954
- US-A1- 2017 190 123

## Description

### Technical Field

The present invention relates to a tape-shaped prepreg which has an excellent tensile strength, and which includes unidirectionally-oriented reinforcing fibers and a thermoplastic resin composition.

### Background Art

Composite materials composed of reinforcing fibers and a matrix resin are lightweight and have excellent mechanical properties, and are widely used in general industrial applications such as automobile members, aerospace industry applications, construction and civil engineering materials, and sports goods. In particular, composite materials including a thermoplastic resin as the matrix resin can be more easily melted by heating and solidified by cooling, as compared to fiber reinforced thermosetting materials. Therefore, such composite materials are expected to provide effects such as an improvement in handleability during the formation process, shortening of cycle time, and the like, and are drawing attentions from the viewpoints of reducing the man-hour and reducing the cost.

On the other hand, thermoplastic resins usually have an extremely higher melt viscosity, as compared to thermosetting resins. Therefore, there is a risk that the use of a thermoplastic resin may result in the deterioration of the impregnating ability of the resin into reinforcing fiber bundles, the deterioration of the orientation and dispersibility of reinforcing fibers due to a random movement of the fibers caused by the flow of the high-viscosity resin, a decrease in the productivity, and the like.

Among various kinds of composite materials, a tape-shaped prepreg obtained by arranging continuous reinforcing fibers in one direction and impregnating the fibers with a matrix resin, is known to exhibit its properties as a reinforcing material to the maximum, in a tensile stress field.

As reinforcement methods for use in the tensile stress field, a method of integrating the tape-shaped prepreg with a resin component by welding, and a method of winding the tape-shaped prepreg around a structural member by filament winding are known, for example, and these reinforcement methods are used for automobile members as well as in civil engineering and construction applications. In such usage forms, a tape-shaped prepreg having a smaller thickness provides a higher processability and a higher ability to conform to the contours of the parts.

In the case of carrying out integrated welding or filament winding, a tape-shaped prepreg needs to be laminated to a certain thickness so as to satisfy a required strength. In this case, the use of a tape-shaped prepreg having a smaller thickness results in a larger number of laminations, and thus requires a longer time for the prepreg to be laid up, which gives rise to concerns regarding formation techniques, such as, for example, the occurrence of voids and/or misalignment between layers. Accordingly, the use of a tape-shaped prepreg having a larger thickness in the production of a molded article allows for shortening the formation time, a reduction in the production cost, and the production of molded articles having a uniform quality. At the same time, however, the use of a tape-shaped prepreg having a larger thickness may result in a higher risk of a decrease in the impregnating ability of the matrix resin into spaces between the reinforcing fibers.

Patent Literature 1 discloses a technique for providing a prepreg with a smaller variation in thickness and fewer cracks, despite including large-tow fiber bundles, by defining the type and the amount of the sizing agent to be used. That is, Patent Literature 1 discloses an invention which enables to improve the decrease in the impregnating ability that occurs when a thermoplastic resin is used as the matrix resin.

Patent Literature 2 discloses a molded item obtained by bundling tape-shaped prepreg precursors formed using a thermoplastic resin and having a low void content. In the molded item disclosed in Patent Literature 2, the impregnating ability of the thermoplastic resin into spaces between the reinforcing fibers is defined by the void content of the tape-shaped prepreg precursor, and it is described therein that the use of a tape-shaped prepreg precursor having a void content greater than the defined numerical value results in a decrease in the flexural strength of the molded item after bundling.

In Patent Literature 3, the degree of dispersity and orientation of reinforcing fibers are evaluated, and a tape-shaped prepreg having a high flexural strength is disclosed. In the tape-shaped prepreg disclosed in Patent Literature 3, the thickness of the tape-shaped prepreg is defined to be 50 µm or more and 150 µm or less, and the prepreg is characterized by having a flexibility and an excellent processability into a molded article, due to having a smaller thickness.

Patent Literature 4 discloses a method of producing a sheet-shaped prepreg, in which method a plurality of reinforcing fiber bundles, each widened by fiber opening, are arranged in the thickness direction and impregnated with a thermoplastic resin, and the plurality of reinforcing fiber bundles are laminated in an impregnation die, to produce a sheet-shaped prepreg. This method is characterized in that it enables to impregnate the resin into spaces between the reinforcing fibers in a uniform and good, and to reduce the time required for impregnation.

Patent Literature 5 discloses a unidirectionally-oriented fiber-reinforced tape which includes reinforcing fibers and a matrix resin, and which has a void fraction of 6% or less, and a thickness of 0.1 mm or more and 1.5 mm or less. Patent literature 6 describes a fiber-reinforced plastic and a method for producing said fiber-reinforced plastic. A prepreg base material having cuts therein is described that comprises a thermoplastic resin impregnated with reinforcing fibers that are arranged in parallel in one direction. Patent Literature 7 describes a fiber-reinforced thermoplastic-resin base which comprises continuous reinforcing fibers, arranged in parallel, and a thermoplastic resin impregnated thereinto.

### Citation List

### Patent Literature

Patent Literature 1: JP 2013-203943 A
Patent Literature 2: JP 3317357 B
Patent Literature 3: JP 2016-216654 A
Patent Literature 4: WO 2012/002417
Patent Literature 5: WO 2015/046290
Patent Literature 6: US 2017 0190123
Patent Literature 7: EP 3 521 345

### Summary of Invention

### Technical Problem

Although the technique disclosed in Patent Literature 1 enables to improve the impregnating ability, it cannot be said that it allows for obtaining a prepreg having excellent mechanical properties, since the extent of the improvement is not defined therein. Further, Patent Literature 1 is silent about the dispersibility of carbon fibers.

Patent Literature 2 is silent about the orientation and the dispersibility of the reinforcing fibers. The prepreg disclosed in Patent Literature 2 is obtained by laminating a plurality of tape-shaped prepreg precursors, and in the Examples therein, the resulting laminate is bundled to form a rod-shaped or a T-shaped molded item. Therefore, it is expected that the resulting reinforcing fibers have a poor dispersibility and orientation, because of an extremely large shift in the positions of the reinforcing fibers at the time of bundling.

The tape-shaped prepreg of the invention disclosed in Patent Literature 3 requires a longer time for being laid up due to having a smaller thickness, which may lead to a risk of increasing the production cost of a final product.

In Patent Literature 4, the degree of uniformity in the impregnation and dispersion of the tape-shaped prepreg produced by the invention disclosed therein is unclear, since there is no mention about the degree, and Patent Literature 4 is silent about the fact that the dispersibility of the reinforcing fibers may be affected depending on the degree of widening. In addition, it is also expected that, in the step of impregnating the belt-like reinforcing fiber bundles with the melted thermoplastic resin in a die, the flow of the melted thermoplastic resin may cause a drastic shift in the positions of the belt-like reinforcing fibers, possibly resulting in the deterioration of the dispersibility.

The invention according to Patent Literature 5 has failed to find out, or to disclose a solution to, the problem that the bundles of the reinforcing fibers widen during the impregnation of the resin, and as a result of which the dispersibility of the fibers in a cross section is decreased.

That is, in order to solve these problems, a tape-shaped prepreg is needed, in which reinforcing fibers are highly impregnated with a thermoplastic resin despite the prepreg having a relatively large thickness, and in which the reinforcing fibers are well dispersed.

An object of the present invention is to provide a tape-shaped prepreg which is uniform and which has a high tensile strength despite having a relatively large thickness, for the purpose of reducing the production cost of a final product. Solution to Problem

The above described problem can be solved by the tape-shaped prepreg according to the present invention described below.

The present invention provides a tape-shaped prepreg including unidirectionally-oriented reinforcing fibers, and a thermoplastic resin composition,
wherein the tape-shaped prepreg has:
   an average thickness of 0.2 mm or more and 1.5 mm or less;
   a void content of 5% by volume or less;
   a degree of dispersity of reinforcing fibers of 0.5 or less; and
a coefficient of variation (%) of said degree of dispersity of reinforcing fibers in the length direction of said tape-shaped prepreg is 5.0% or less.

The present invention also provides a molded article formed using a tape-shaped prepreg, molded article formed using a tape-shaped prepreg as described above.

Further, the present invention also provides, a method of producing a tape-shaped prepreg, said tape-shaped prepreg comprising unidirectionally-oriented reinforcing fibers, and a thermoplastic resin composition,
wherein a fixed guide(s) is/are provided in a die for impregnating said reinforcing fibers with said thermoplastic resin composition,
wherein at least a pair of projection parts are provided on each of the surface(s) of said fixed guide(s) above and/or under which said reinforcing fibers pass,
wherein the direction of a straight line having the shortest distance between said pair of projection parts, is substantially vertical to the direction of orientation of said reinforcing fibers, and
wherein the widening of said tape-shaped prepreg is restricted by defining the interval between said pair of projection parts.

### Advantageous Effects of Invention

The present invention enables to provide a tape-shaped prepreg which has a high tensile strength as well as smaller variations in tensile strength and tape thickness, and at the same time, which enables to reduce the production cost of a final product.

### Brief Description of Drawings

FIG. 1 is a schematic diagram showing one example of the production method according to the present invention.
FIG. 2 is a schematic diagram showing one example of a fixed guide provided with width regulating parts to be used in the present invention.
FIG. 3 is a schematic diagram showing one example of a fixed guide provided with width regulating parts to be used in the present invention.
FIG. 4 is a schematic diagram showing one example of a fixed guide provided with width regulating parts to be used in the present invention.

### Description of Embodiments

In the tape-shaped prepreg according to the present invention, the reinforcing fibers are oriented in one direction, and the degree of dispersity of reinforcing fibers X, as evaluated by the method described below, is 0.5 or less. The degree of dispersity of reinforcing fibers is preferably 0.4 or less. When the degree of dispersity of reinforcing fibers is 0.5 or less, the reinforcing fibers are dispersed substantially uniformly, and variations in mechanical strength which occur depending on the positions of the fibers in the tape-shaped prepreg are reduced. In the present invention, a thermoplastic resin is used, which has a property to shrink after the formation process. Since the volume of the reinforcing fibers does not change even after the formation process, in principle, more uniformly dispersed reinforcing fibers result in lower variations in the thickness of the resulting tape-shaped prepreg. On the other hand, in the case of a tape-shaped prepreg having a degree of dispersity of reinforcing fibers X of less than 0.1, the reinforcing fibers are more uniformly dispersed and the prepreg has an excellent quality as a tape-shaped prepreg; but there is a risk that the productivity in the formation process may be decreased, and thus, such a prepreg may not necessarily be preferred in reality. Therefore, the degree of dispersity of reinforcing fibers is preferably 0.1 or more. When the degree of dispersity of reinforcing fibers X is more than 0.5, the reinforcing fibers are more unevenly dispersed, resulting in larger variations in the thickness and mechanical strength. The procedure for evaluating the degree of dispersity of reinforcing fibers of the tape-shaped prepreg is as shown in the following (i) to (iii):
(i) capturing a cross-sectional image of the reinforcing fibers in a cross section substantially vertical to the direction of orientation of the reinforcing fibers;
(ii) dividing the captured image in square units of 0.1 mm square, selecting a plurality of square units at random such that (the total area of the square units / the cross-sectional area of the tape-shaped prepreg × 100 (%)) is 10% or more, and determining the area of the reinforcing fiber portion included in each of all the selected square units; and
(iii) determining the coefficient of variation of the areas of the reinforcing fibers, and the thus determined value is defined as the degree of dispersity of reinforcing fibers.

The above described procedure will be described in more detail. First, a cross-sectional image of the tape-shaped prepreg is captured in a cross section vertical to the direction of orientation of the reinforcing fibers in the tape-shaped prepreg, at a magnification of 200 times. The captured image is then divided in square units of 0.1 mm square. Next, in the captured cross-sectional image, a plurality of square units are selected at random such that (the total area of the square units / the cross-sectional area of the tape-shaped prepreg × 100 (%)) is 10% or more. It is noted, however, the units of the image in which only the tape-shaped prepreg is captured are selected at this time, and units of the image in which the tape-shaped prepreg is partially captured or not captured at all are excluded. Subsequently, the area of the reinforcing fibers is determined for each of all the selected square units. At this time, the area of the reinforcing fibers may be determined as the number of pixels, by performing binarization using image processing software. Finally, the coefficient of variation is calculated from the areas of the reinforcing fibers determined in all the selected square units, in accordance with the following Equation. The thus determined coefficient of variation is defined as the degree of dispersity of reinforcing fibers.
The number of square units to be selected: N ≥ S/ S1 × 0.1
S1: area of square unit
S: cross-sectional area of tape-shaped prepreg

It is noted that N may usually be any number as long as it satisfies the above described Inequality. However, if the number of N selected causes a large change in the value of X, a largest possible number should be selected as the number of N. Ultimately, the coefficient of variation should be determined based on the number of all the square units (with the proviso that the square units in which the tape-shaped prepreg is partially captured or not captured at all are excluded).

Coefficient of variation (degree of dispersity of reinforcing fibers): X = √(Σ(Ai - Aave)²/ (N - 1))/ Aave
Ai: the area of the reinforcing fibers in the i-th square unit among N pieces of square units
Aave: the mean value of the areas of the reinforcing fibers in the square units

In a preferred embodiment of the present invention, the degree of dispersity of reinforcing fibers to be defined as the coefficient of variation can be such that, when several locations in the tape-shaped prepreg in the length direction thereof are selected, the coefficient of variation (%) determined in the cross sections at the selected locations, that is, the coefficient of variation of the degree of dispersity of reinforcing fibers in the length direction of the prepreg, is equal to or less than a certain value. Specifically, a coefficient of variation Y (%) is 5.0% or less, and more preferably 3.0% or less. When the coefficient of variation (%) of the degree of dispersity of reinforcing fibers in the length direction of the prepreg is 5.0% or less, variations in the thickness and the tensile strength of the tape-shaped prepreg along the length direction thereof is reduced, and this leads to an improvement in the stability of quality during continuous production. The coefficient of variation Y (%) is determined by: capturing cross-sectional images of the tape-shaped prepreg at arbitrarily selected four or more locations in the length direction of the prepreg to carry out the measurement; determining the coefficient of variation X in each cross section by the method described above; and performing the calculation in accordance with the following Equation.

Coefficient of variation (%) of the degree of dispersity of reinforcing fibers in the length direction: Y = √(Σ(Xi - Xave)²/ (M - 1))/ Xave × 100
M: the number of cross-sectional images taken along the length direction of the tape-shaped prepreg
Xi: the degree of dispersity of reinforcing fibers determined from the i-th cross-sectional image among M pieces of cross-sectional images
Xave: the mean value of the degrees of dispersity of reinforcing fibers.

The spaces between the reinforcing fibers in the tape-shaped prepreg are filled with a thermoplastic resin composition. That is, the reinforcing fibers in the tape-shaped prepreg according to in the present invention are impregnated with a thermoplastic resin composition, as a matrix resin.

The method of producing the tape-shaped prepreg according to the present invention is not particularly limited. However, the tape-shaped prepreg is preferably produced by a continuous process, such as a pultrusion method.

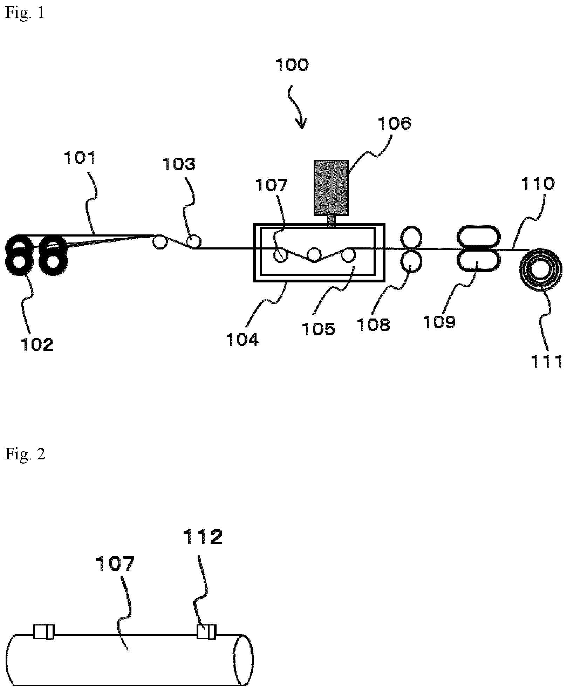

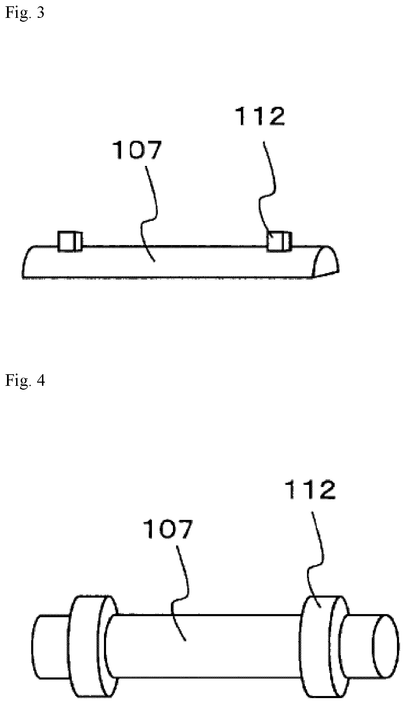

Examples of the method of producing a unidirectionally-oriented tape-shaped prepreg, by impregnating reinforcing fibers with a thermoplastic resin composition include: a molten resin impregnation process, a powder impregnation process, a film impregnation process, and a commingle impregnation process. In the present invention, the method of impregnating the reinforcing fibers is not particularly limited. However, the molten resin impregnation process, in which the thermoplastic resin composition need not be processed in advance, is preferably used. The tape-shaped prepreg can be produced using a production apparatus shown in FIG. 1. For example, in FIG. 1, reinforcing fiber bundles 101 are continuously fed from bobbins 102, through tow pass guides 103, and the width and the tensile force per one strand of reinforcing fiber bundle are controlled before introducing the reinforcing fiber bundles 101 into an impregnation die 104. When the continuously fed reinforcing fiber bundles 101 pass through the impregnation die 104, a constant amount of a thermoplastic resin composition 105 is fed from a feeder 106, and the reinforcing fiber bundles 101 are ironed by fixed guides 107 so as to impregnate the reinforcing fiber bundles 101 with the thermoplastic resin composition 105. Each fixed guide is usually configured such that the surface thereof above which the reinforcing fibers pass, or the surface thereof under which the reinforcing fibers pass, is curved. Examples thereof include the fixed guides shown in FIGs. 2, 3 and 4. The reinforcing fiber bundles 101 impregnated with the thermoplastic resin composition 105 are continuously drawn from a nozzle of the impregnation die 104 by pull rolls109, cooled and solidified by being passed between chill rolls 108, and wound by a winder 111. As a result, a tape-shaped prepreg 110 can be obtained. In order to balance between the impregnating ability of the resin into spaces between the reinforcing fibers and the dispersibility of the reinforcing fibers, in the above described production method, the width per one strand of reinforcing fiber bundle before being introduced into the impregnation die is preferably controlled within the range of from 5 mm or more and 20 mm or less, and more preferably within the range of from 5 mm or more and 15 mm or less. Further, the tensile force to be applied per one strand of reinforcing fiber bundle before being introduced into the impregnation die is preferably controlled within the range of from 200 cN or more and 1,800 cN or less, and more preferably within the range of from 400 cN or more and 1,600 cN or less. The range of the tensile force may be any combination of the above described upper limits and lower limits. It is noted that the tensile force to be applied before being introduced into the impregnation die refers, for example, in FIG. 1, to a tensile force applied to one strand of reinforcing fiber bundle between the tow pass guides 103 and the impregnation die 104. The tensile force can be measured by a known method. Further, each fixed guide 107 includes, at both ends thereof, width regulating parts 112 which are provided spaced apart by an interval corresponding to the width of the tape-shaped prepreg to be produced. The width regulating parts as used herein refer to parts which are provided as a pair of projection parts on the above described surface of each fixed guide 107, such as, for example, any of those as shown in FIGs. 2, 3 and 4. On the above described surface of each fixed guide 107, at least a pair of projection parts is provided, and a plurality of a pair of projection parts may be provided (it is preferred that equal number of projection parts be provided on each of both sides, but the number of projection parts may differ between both sides). In this case, prepreg precursors, that is, the reinforcing fiber bundles which have been impregnated with the resin, may be allowed to flow in multiple lines, so as to simultaneously produce a plurality of the tape-shaped prepregs. At this time, it is desired that the pair of projection parts be arranged such that the direction of a straight line having the shortest distance therebetween is substantially vertical to the direction of orientation of the reinforcing fibers. Further, an excessive widening of the reinforcing fiber bundles in the width direction is prevented by defining the interval between the pair of projection parts, so as to regulate the width of the prepreg precursor. The interval between the width regulating parts, that is, the interval between the pair of projection parts, is preferably equal to or greater than the width of the tape-shaped prepreg, and equal to or less than 1.1 times the width of the tape-shaped prepreg. In the impregnation die, the flow of the thermoplastic resin composition causes the reinforcing fibers to move in the width direction of the tape-shaped prepreg. In particular, in the case of using a resin having a high viscosity, such as a melted thermoplastic resin, the movement of the reinforcing fibers occurs in a marked degree. Thus, the above described arrangement of the width regulating parts enables to prevent the reinforcing fiber bundles from being excessively widened in the width direction, when impregnating the reinforcing fiber bundles with the thermoplastic resin, resulting in an improvement in the degree of dispersity of reinforcing fibers. Further, the straightness of the reinforcing fibers is improved, thereby enabling to obtain a tape-shaped prepreg in which variations in the degree of dispersity of reinforcing fibers in the length direction of the tape-shaped prepreg are reduced. The width regulating parts to be provided in each fixed guide may be projections, walls, steps or the like, and the form thereof is not limited to those shown in FIGs. 2, 3 and 4.

Examples of the reinforcing fibers to be used in the present invention include carbon fibers, metal fibers, organic fibers and inorganic fibers, but not particularly limited thereto.

Examples of the carbon fibers include polyacrylonitrile (Poly Acrylo-Nitrile: PAN)-based carbon fibers, pitch-based carbon fibers, cellulose-based carbon fibers, vapor-grown carbon fibers, and graphitized fibers of these fibers. Of these, the PAN-based carbon fibers are carbon fibers produced using polyacrylonitrile fibers as a raw material. The pitch-based carbon fibers are carbon fibers produced using petroleum tar or petroleum pitch as a raw material. The cellulose-based carbon fibers are carbon fibers produced using viscose rayon, cellulose acetate or the like as a raw material. The vapor-grown carbon fibers are carbon fibers produced using a hydrocarbon or the like as a raw material. Among these carbon fibers, PAN-based carbon fibers are preferably used, because of having an excellent balance between the strength and the elastic modulus.

Examples of the metal fibers include fibers composed of metals such as iron, gold, silver, copper, aluminum, brass and stainless steel.

Examples of the organic fibers include fibers composed of organic materials, such as aramid fibers, polyphenylene sulfide fibers, polyester fibers, polyamide fibers and polyethylene fibers. Examples of the aramid fibers include: para-aramid fibers having an excellent strength and elastic modulus; and meta-aramid fibers having an excellent flame retardancy and long-term heat resistance. Examples of the para-aramid fibers include polyparaphenylene terephthalamide fibers and copolyparaphenylene-3,4'-oxydiphenylene terephthalamide fibers. Examples of the meta-aramid fibers include polymetaphenylene isophthalamide fibers. As the aramid fibers, para-aramid fibers having an elastic modulus higher than that of meta-aramid fibers are preferably used.

Examples of the inorganic fibers include fibers composed of inorganic materials, such as glass fibers, basalt fibers, silicon carbides fibers and silicon nitrides fibers. Examples of the glass fibers include E-glass fibers (for electric applications), C-glass fibers (for anti-corrosion applications), S-glass fibers, and T-glass fibers (having a high strength and a high elastic modulus), and any of these fibers may be used. The basalt fibers are fibers obtained by processing basalt, which is a mineral, into fibers, and have extremely high heat resistance. Basalt generally contains from 9 to 25% of FeO or FeO₂, which is an iron compound, and from 1 to 6% of TiO or TiO₂, which is a titanium compound. It is also possible to increase the amount of these components in a molten state, before forming basalt into fibers.

In the present invention, it is more preferred to use, as the reinforcing fibers, at least one kind of reinforcing fibers selected from the group consisting of carbon fibers, glass fibers, basalt fibers and aramid fibers. Among these, it is particularly preferred to use carbon fibers, which enables to efficiently achieve a reduction in weight as well as excellent mechanical properties such as strength.

A plurality of kinds of reinforcing fibers may be used in combination, as the reinforcing fiber, and a combination of a plurality of kinds of fibers is expected to provide a synergetic effect. For example, the combination of carbon fibers and glass fibers enables to achieve both a high reinforcing effect, which is provided by the use of carbon fibers, and a reduction in cost, which is enabled by the use of inexpensive glass fibers.

In the tape-shaped prepreg according to the present invention, the reinforcing fibers are usually formed by arranging one or a plurality of reinforcing fiber bundles, each formed by bundling a large number of pieces of monofilaments. The total number of filaments (the number of monofilaments) in the reinforcing fibers, when one or a plurality of reinforcing fiber bundles are arranged, in the tape-shaped prepreg according to the present invention, is preferably within the range of from 1,000 to 2,000,000. From the viewpoint of productivity, the total number of filaments in the reinforcing fibers in the substrate according to the present invention is more preferably from 1,000 to 1,000,000, still more preferably from 1,000 to 600,000, and particularly preferably from 1,000 to 300,000. The upper limit of the total number of filaments in the reinforcing fibers is selected, taking into account the balance with the dispersibility and the handleability, and such that the productivity, dispersibility and handleability can be maintained in a good manner.

Further, it is preferred to use, as the reinforcing fibers, those having a tensile strength of from 3,000 to 6,000 MPa. It is noted that the following relationship is achieved: tensile strength (MPa) of reinforcing fibers = strength of monofilaments (N)/ cross-sectional area (mm²) of monofilaments.

The reinforcing fibers may be surface treated with a sizing agent, in order to improve adhesion, overall composite properties and high-order processability. The sizing agent is preferably one obtained by mixing any of components such as a bisphenol type epoxy compound, a linear low-molecular-weight epoxy compound, a polyethylene glycol, a polyurethane, a polyester, an emulsifying agent and a surfactant, for the purpose of adjusting viscosity, improving abrasion resistance, improving fluffing resistance, improving sizing property, improving higher-order processability and/or the like.

The means for applying the sizing agent is not particularly limited. However, the examples of the application method include a method in which the reinforcing fibers are immersed in a sizing liquid via a roller, a method in which the reinforcing fibers are brought into contact with a roller to which a sizing liquid is applied, and a method in which a sizing liquid is sprayed to the reinforcing fibers as a mist. The application method may be either a batch process or a continuous process. However, preferred is a continuous process, which enables to achieve a good productivity and a reduced variation. At this time, it is preferred that the concentration, temperature, yarn tension and the like of the sizing liquid be controlled such that the effective ingredient(s) of the sizing agent can be deposited uniformly, and within an appropriate range of deposition amount with respect to the amount of reinforcing fibers. Further, when applying the sizing agent, it is more preferred that the reinforcing fibers be excited by ultrasonic waves.

The thermoplastic resin to be contained in the thermoplastic resin composition in the tape-shaped prepreg according to the present invention is not particularly limited, as long as it is a thermoplastic resin. Examples thereof include polypropylene, polyethylene, polystyrene, polyvinyl chloride, polyvinyl acetate, ABS resins, polyethylene terephthalate, polybutylene terephthalate, polyamides, polyamideimides, polyacetals, polycarbonates, modified polyphenylene oxide, polyvinyl alcohol, polyalkylene oxides, polysulfones, polyphenylene sulfide, polyarylates, polyetherimide, polyether ether ketone, polyethersulfone, polyimides, liquid crystal polymers, polymethyl methacrylate and polysulfones. In the present invention, the definition of the thermoplastic resin composition includes a composition composed of a mixture of a plurality of thermoplastic resins, a composition composed of a mixture of a thermoplastic resin(s) and an additive(s), as well as a composition consisting of one kind of a thermoplastic resin.

In particular, the thermoplastic resin to be contained in the thermoplastic resin composition in the tape-shaped prepreg according to the present invention is preferably a polyamide resin, since the use of a polyamide resin enables to obtain a tape-shaped prepreg excellent in physical properties, such as heat resistance, strength and rigidity.

The polyamide resin as used herein refers to a polyamide containing, as main constituent components, an amino acid, a lactam or a diamine, and a dicarboxylic acid. Representative examples of the main constituent components include: amino acids such as 6-aminocaproic acid, 11-aminoundecanoic acid, 12-aminododecanoic acid and p-aminomethyl benzoic acid; lactams such as ε-caprolactam and ω-laurolactam; aliphatic, alicyclic and aromatic diamines such as tetramethylenediamine, hexamethylenediamine, 2-methylpentamethylenediamine, nonamethylenediamine, undecamethylenediamine, dodecamethylenediamine, 2,2,4-/2,4,4-trimethylhexamethylenediamine, 5-methylnonamethylenediamine, m-xylylenediamine, p-xylylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine and aminoethylpiperazine; and aliphatic, alicyclic and aromatic dicarboxylic acids such as adipic acid, suberic acid, azelaic acid, sebacic acid, dodecanedioic acid, terephthalic acid, isophthalic acid, 2-chloroterephthalic acid, 2-methylterephthalic acid, 5-methylisophthalic acid, 5-sodium sulfoisophthalic acid, 2,6-naphthalenedicarboxylic acid, hexahydroterephthalic acid and hexahydroisophthalic acid. In the present invention, Nylon homopolymers or copolymers derived from these raw materials can be used singly, or as a mixture of any combination.

Specific examples of the polyamide resin particularly useful as the thermoplastic resin to be contained in the thermoplastic resin composition in the tape-shaped prepreg according to the present invention, include: polycaproamide (Nylon 6), polyhexamethylene adipamide (Nylon 66), polytetramethylene adipamide (Nylon 46), polyhexamethylene sebacamide (Nylon 610), polyhexamethylene dodecamide (Nylon 612), polyundecanamide (Nylon 11), polydodecanamide (Nylon 12), polycaproamide/polyhexamethylene adipamide copolymer (Nylon 6/66), polycaproamide/polyhexamethylene terephthalamide copolymer (Nylon 6/6T), polyhexamethylene adipamide/polyhexamethylene terephthalamide copolymer (Nylon 66/6T), polyhexamethylene adipamide/polyhexamethylene isophthalamide/polycaproamide copolymer (Nylon 66/6I/6), polyhexamethylene adipamide/polyhexamethylene isophthalamide copolymer (Nylon 66/6I), polyhexamethylene terephthalamide/polyhexamethylene isophthalamide copolymer (Nylon 6T/6I), polyhexamethylene terephthalamide/polydodecanamide copolymer (Nylon 6T/12), polyhexamethylene adipamide/polyhexamethylene terephthalamide/polyhexamethylene isophthalamide copolymer (Nylon 66/6T/6I), polyxylylene adipamide (Nylon XD6), polyhexamethylene terephthalamide/poly-2-methylpentamethylene terephthalamide copolymer (Nylon 6T/M5T) and polynonamethylene terephthalamide (Nylon 9T); and mixtures and copolymers thereof. In particular, preferred is polyamide 6, which is excellent in impregnating ability into the reinforcing fibers and handleability.

The thermoplastic resin to be contained in the thermoplastic resin composition in the tape-shaped prepreg according to the present invention preferably has a melt viscosity of 200 Pa s or less, at a temperature 50°C or more higher than the melting point of the resin. More specifically, the thermoplastic resin preferably has a melt viscosity of 200 Pa s or less, at a temperature within the range of from 50°C higher than the melting point to 100°C higher than the melting point of the resin. When the thermoplastic resin has a melt viscosity within the above described range, the resin has an excellent flowability and an excellent impregnating ability into the spaces between the reinforcing fibers. The melt viscosity as used herein refers to a value as measured by a Koka-type flow tester, using a nozzle having a diameter of 0.5 mm and a length of 10 mm, at a shear rate of 1,000 sec⁻¹.

The tape-shaped prepreg according to the present invention has an average thickness of from 0.2 to 1.5 mm, preferably from 0.25 to 1.2 mm, and more preferably from 0.3 to 1.0 mm. The range of the average thickness may be any combination of the above described upper limits and lower limits. When the tape-shaped prepreg has an average thickness of less than 0.2 mm, there is a risk that a longer time may be required for lamination during the formation process to result in an increase in the production cost of a final product, or that the number of lamination may be increased to result in the occurrence of voids, misalignment and/or the like between layers. When the tape-shaped prepreg has an average thickness of more than 1.5 mm, the impregnating ability of the thermoplastic resin composition into spaces between the reinforcing fibers will be deteriorated. The average thickness of the tape-shaped prepreg is defined as a value obtained by measuring the thickness of the tape-shaped prepreg at arbitrarily selected 15 or more different points, and averaging the measured values at these points. The coefficient of variation C (%) of the thickness of the tape-shaped prepreg can be determined in accordance with the following Equation, and is preferably 2.0% or less, and more preferably 1.0% or less. When the coefficient of variation C (%) of the thickness is 2.0% or less, the tape-shaped prepreg has an excellent adhesion to another member.

Coefficient of variation (%) of the thickness of the tape-shaped prepreg: C = √(Σ(Di - Dave)²/(K - 1))/ Dave × 100
Di: the value of the thickness of the i-th location, among the thicknesses measured at K locations
Dave: the mean value of the thicknesses of the tape-shaped prepreg
K: the number of locations at which the thickness is measured

The fiber volume content in 100% by volume of the tape-shaped prepreg according to the present invention is preferably from 30 to 70% by volume, more preferably from 35 to 65% by volume, and still more preferably from 40 to 60% by volume. The range of the fiber volume content may be any combination of the above described upper limits and lower limits. When the fiber volume content is 30% by volume or more, the resulting tape-shaped prepreg has excellent mechanical properties, and provides an excellent reinforcement to another member. When the fiber volume content is 70% by volume or less, the impregnating ability of the thermoplastic resin composition into the reinforcing fibers will be improved.

The void content in 100% by volume of the tape-shaped prepreg according to the present invention is 5% by volume or less, preferably 4% by volume or less, and more preferably 3% by volume or less. When the void content is more than 5% by volume, the tensile strength of the tape-shaped prepreg will be decreased. A lower void content of the tape-shaped prepreg is more preferred, and thus the lower limit of the void content is 0% by volume. The void content can be adjusted to 5% by volume or less, by means of such as, for example, reducing the melt viscosity of the thermoplastic resin composition to be impregnated, increasing the pressure to be applied during the impregnation, or the like.

In the present invention, the fiber volume content and the void content described above can be measured by methods described in the Examples to be described later. The device for measuring the specific gravity, which is required in the calculation process of the fiber volume content and the void content, is not limited to the specific device to be described later.

The tensile strength of the tape-shaped prepreg in the present invention, as measured in accordance with ASTM D3039/ D3039M-07, is preferably 1,500 MPa or more, and more preferably 1,750 MPa or more. When the tape-shaped prepreg has a tensile strength of 1,500 MPa or more, the prepreg provides an excellent reinforcement to another member. The tensile strength of the tape-shaped prepreg is the higher the better. However, in order to produce a tape-shaped prepreg having a high impregnating ability, the tensile strength is preferably 3,500 MPa or less, and a realistic upper limit thereof is considered to be about 4,200 MPa. The tensile strength can be adjusted to 1,500 MPa or more, by means such as, for example, uniformly dispersing the reinforcing fibers, controlling the void content, or the like.

In the present invention, the tensile strength can be measured by the method described in the Examples to be described below.

### Examples

The present invention will now be described specifically, based on Examples and Comparative Examples.

### (1) Method of Producing Tape-shaped Prepreg

Carbon fibers are used as the reinforcing fibers, and a commercially available polyamide 6 resin is used as the thermoplastic resin composition. A tape-shaped prepreg was produced using a production apparatus shown in FIG. 1. The bobbins 102 around which the reinforcing fiber bundles 101 had been wound were prepared, as shown in FIG. 1, and reinforcing fiber bundles 101 were continuously fed from the respective bobbins 102, through the tow pass guides 103. When the continuously fed reinforcing fiber bundles 101 pass through the impregnation die 104, the reinforcing fiber bundles 101 were ironed by the fixed guides 107, so that the reinforcing fiber bundles 101 were impregnated with the thermoplastic resin composition 105 which had been fed in a constant amount from the feeder 106 filled with the thermoplastic resin composition. The reinforcing fiber bundles 101 which had been impregnated with the thermoplastic resin composition 105 in the impregnation die 104 were continuously drawn from the nozzle of the impregnation die 104. The reinforcing fiber bundles 101 which had been drawn by the pull rolls 109 were cooled and solidified by being passed between the chill rolls 108, wound by the winder 111, to obtain the tape-shaped prepreg 110.

### (2) Method of Measuring Thickness of Tape-shaped Prepreg

The thickness of the tape-shaped prepreg was measured at arbitrarily selected 15 or more different points by a micrometer (BLM-25M; manufactured by Mitutoyo Corporation), and the average thickness and the coefficient of variation (%) of the thickness were determined. Based on the thus determined coefficient of variation of the thickness, the evaluation was carried out in accordance with the following criteria. In the following criteria, A and B are criteria for "Pass", and A is superior to B.

A: 1.0% or less
B: more than 1.0% and 2.0% or less
C: more than 2.0%

### (3) Method of Evaluating Degree of Dispersity of Reinforcing Fibers

A cross-sectional image of the reinforcing fibers in the tape-shaped prepreg was captured in a cross section vertical to the direction of orientation the reinforcing fibers. The capture of the image was carried out using a light microscope (KEYENCE VHX-1000) at a magnification of 200 times. The thus captured cross-sectional image of the tape-shaped prepreg was divided into square units of 0.1 mm square, using image processing software ImageJ. Subsequently, in the captured cross-sectional image, a plurality of square units were selected at random such that (the total area of the square units / the cross-sectional area of the tape-shaped prepreg × 100 (%)) was 10% or more. However, the square units were selected excluding those in which the tape-shaped prepreg was partially captured or not captured at all. Subsequently, the area of the reinforcing fibers was determined for each of all the selected square units. At this time, the area of the reinforcing fibers was determined as the number of pixels, by performing binarization using the above described image processing software. Finally, the coefficient of variation was calculated from the areas of the reinforcing fibers determined in all the square units, in accordance with the following Equation. The thus determined coefficient of variation is defined as the degree of dispersity of reinforcing fibers. Further, the degree of dispersity of reinforcing fibers was measured at four locations, spaced apart at intervals of 3 m or more in the length direction of the tape-shaped prepreg, and the mean value and the coefficient of variation (%) of the measured values were calculated.
The number of square units to be selected: N ≥ S/ S1 × 0.1
S1: area of square unit
S: cross-sectional area of tape-shaped prepreg
Coefficient of variation (degree of dispersity of reinforcing fibers): X = √(Σ(Ai - Aave)²/ (N - 1))/ Aave
   Ai: the area of the reinforcing fibers in the i-th square unit among N pieces of square units
   Aave: the mean value of the areas of the reinforcing fibers in the square units
   Coefficient of variation (%) of the degree of dispersity of reinforcing fibers in the length direction: Y = √(Σ(Xi - Xave)²/ (M - 1))/ Xave × 100
   Xi: the degree of dispersity of reinforcing fibers determined from the i-th cross-sectional image among M pieces of cross-sectional images
   Xave: the mean value of the degrees of dispersity of reinforcing fibers
   M: the number of cross-sectional images taken along the length direction of the tape-shaped prepreg
Based on the thus determined value of the coefficient of variation of the degree of dispersity of reinforcing fibers in the length direction, the evaluation was carried out in accordance with the following criteria. In the following criteria, A and B are criteria for "Pass", and A is superior to B.
A: 3.0% or less
B: more than 3.0% and 5.0% or less
C: more than 5.0%

### (4) Method of Measuring Specific Gravity

The specific gravity was measured using a specific gravity measuring device (ELECTRONIC DENSIMETER SD-200L, manufactured by Alfa Mirage Co., Ltd.).

### (5) Methods of Measuring Fiber Volume Content and Void Content

A quantity of about 0.5 g of the tape-shaped prepreg was weighed (W1 (g)), and then left to stand in an electric furnace controlled to a temperature of 500°C for 120 minutes, in a nitrogen gas stream flowing at 50 mL/min, so that the thermoplastic resin composition in the tape-shaped prepreg was completely thermally decomposed. Then the resultant was transferred to a container placed in a dry nitrogen gas stream flowing at 20 L/min, and cooled for 15 minutes. Thereafter, the resulting reinforcing fibers were weighed (W2 (g)) to determine the amount of reinforcing fibers. Subsequently, respective values were calculated from the respective measured values, in accordance with the following Equations. Fiber volume content (%) = (W2(g)/specific gravity of reinforcing fibers (g/cm3))/(W1 (g)/specific gravity of tape-shaped prepreg(g/cm3)) × 100 Resin volume content (%) = ((W1-W2)(g)/specific gravity of thermoplastic resin composition (g/cm3))/(W1 (g)/specific gravity of tape-shaped prepreg (g/cm3))×100 Void content (%) = 100-fiber volume content (%) - resin volume content (%).

### (6) Method of Measuring Tensile Strength

The tensile strength of the tape-shaped prepreg was measured in accordance with ASTM D3039/ D3039-07.

Based on the thus measured value of the tensile strength, the evaluation was carried out in accordance with the following criteria. In the following criteria, A and B are criteria for "Pass", and A is superior to B.
A: 1,750 MPa or more and less than 3,500 MPa
B: 1,500 MPa or more and less than 1,750 MPa
C: less than 1,500 MPa

### (7) Raw Materials

(A) Carbon fibers (T700S, manufactured by Toray Industries, Inc.) were used as the continuous reinforcing fibers
(B) Polyamide 6 (manufactured by Toray Industries, Inc.) was used as the thermoplastic resin. The viscosity of the thermoplastic resin at a temperature 50°C higher than the melting point of the resin was about 40 Pa s.

### (Example 1)

In the above described (1) Method of Producing Tape-shaped Prepreg, the tensile force to be applied per one strand of reinforcing fiber bundle before being introduced into the impregnation die 104 was adjusted to 1,000 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.4 mm.

### (Example 2)

In the above described (1) Method of Producing Tape-shaped Prepreg, the tensile force to be applied per one strand of reinforcing fiber bundle before being introduced into the impregnation die 104 was adjusted to 600 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.4 mm.

### (Example 3)

In the above described (1) Method of Producing Tape-shaped Prepreg, the tensile force to be applied per one strand of reinforcing fiber bundle before being introduced into the impregnation die 104 was adjusted to 400 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.4 mm.

### (Example 4)

In the above described (1) Method of Producing Tape-shaped Prepreg, the tensile force to be applied per one strand of reinforcing fiber bundle before being introduced into the impregnation die 104 was adjusted to 1,000 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.3 mm.

### (Example 5)

In the above described (1) Method of Producing Tape-shaped Prepreg, the tensile force to be applied per one strand of reinforcing fiber bundle before being introduced into the impregnation die 104 was adjusted to 600 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.3 mm.

### (Example 6)

In the above described (1) Method of Producing Tape-shaped Prepreg, the tensile force to be applied per one strand of reinforcing fiber bundle before being introduced into the impregnation die 104 was adjusted to 400 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.3 mm.

### (Example 7)

In the above described (1) Method of Producing Tape-shaped Prepreg, the tensile force to be applied per one strand of reinforcing fiber bundle before being introduced into the impregnation die 104 was adjusted to 1,000 cN, the width of one strand of reinforcing fiber bundle before being introduced into the impregnation die 104 was adjusted to 10 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.4 mm.

### (Example 8)

In the above described (1) Method of Producing Tape-shaped Prepreg, the tensile force to be applied per one strand of reinforcing fiber bundle before being introduced into the impregnation die 104 was adjusted to 1,000 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 40% by volume and an average tape thickness of 0.4 mm.

### (Example 9)

In the above described (1) Method of Producing Tape-shaped Prepreg, the tensile force to be applied per one strand of reinforcing fiber bundle before being introduced into the impregnation die 104 was adjusted to 1,000 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.2 mm.

### (Example 10)

In the above described (1) Method of Producing Tape-shaped Prepreg, the tensile force to be applied per one strand of reinforcing fiber bundle before being introduced into the impregnation die 104 was adjusted to 1,600 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 0.8 mm.

### (Example 11)

In the above described (1) Method of Producing Tape-shaped Prepreg, the tensile force to be applied per one strand of reinforcing fiber bundle before being introduced into the impregnation die 104 was adjusted to 1,600 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 1.2 mm.

Due to having a relatively higher void content, a slight decrease in the tensile strength was observed.

### (Example 12)

In the above described (1) Method of Producing Tape-shaped Prepreg, the tensile force to be applied per one strand of reinforcing fiber bundle before being introduced into the impregnation die 104 was adjusted to 1,800 cN, the width of one strand of reinforcing fiber bundle before being introduced into the impregnation die 104 was adjusted to 15 mm, and the fixed guides 107 on each surface of which a pair of width regulating parts 112 were provided such that the shortest distance between the projection parts was substantially vertical to the fiber direction were used, to form a tape-shaped prepreg 109 having a fiber volume content of 50% by volume and an average tape thickness of 1.5 mm.

### (Comparative Example 1)

In the above described (1) Method of Producing Tape-shaped Prepreg, the tensile force to be applied per one strand of reinforcing fiber bundle before being introduced into the impregnation die 104 was adjusted to 100 cN, the width of one strand of reinforcing fiber bundle before being introduced into the impregnation die 104 was adjusted to 5 mm, and the fixed guides 107 which had not been provided with the width regulating parts 112 were used, to form a tape-shaped prepreg 109 having a fiber volume content of 50% by volume and an average tape thickness of 0.4 mm.

### (Comparative Example 2)

In the above described (1) Method of Producing Tape-shaped Prepreg, the tensile force to be applied per one strand of reinforcing fiber bundle before being introduced into the impregnation die 104 was adjusted to 400 cN, the width of one strand of reinforcing fiber bundle before being introduced into the impregnation die 104 was adjusted to 5 mm, and the fixed guides 107 which had not been provided with the width regulating parts 112 were used, to form a tape-shaped prepreg 109 having a fiber volume content of 50% by volume and an average tape thickness of 0.4 mm.

The resulting tape-shaped prepreg had large variations in the tape qualities, including tensile properties, and was not practically usable.

### (Comparative Example 3)

In the above described (1) Method of Producing Tape-shaped Prepreg, the tensile force to be applied per one strand of reinforcing fiber bundle before being introduced into the impregnation die 104 was adjusted to 2,000 cN, the width of one strand of reinforcing fiber bundle before being introduced into the impregnation die 104 was adjusted to 15 mm, and the fixed guides 107 which had not been provided with the width regulating parts 112 were used, to form a tape-shaped prepreg 109 having a fiber volume content of 50% by volume and an average tape thickness of 2.0 mm.

The results of the above described Examples and Comparative Examples are shown in Table 1 and Table 2.

**[Table 1]**

| | | Example 1 | Example 2 | Example 3 | Example 4 | Example 5 | Example 6 | Example 7 | Example 8 |
|---|---|---|---|---|---|---|---|---|---|
| (A) Reinforcing fibers | | Carbon fibers | Carbon fibers | Carbon fibers | Carbon fibers | Carbon fibers | Carbon fibers | Carbon fibers | Carbon fibers |
| (B) Thermoplastic resin composition | | Polyamide 6 | Polyamide 6 | Polyamide 6 | Polyamide 6 | Polyamide 6 | Polyamide 6 | Polyamide 6 | Polyamide 6 |
| Fiber Volume Content | % by volume | 50 | 50 | 50 | 50 | 50 | 50 | 50 | 40 |
| Average tape thickness | mm | 0.4 | 0.4 | 0.4 | 0.3 | 0.3 | 0.3 | 0.4 | 0.4 |
| Presence or absence of width regulating parts provided on fixed guides | | Present | Present | Present | Present | Present | Present | Present | Present |
| Width per one strand of reinforcing fiber bundle before being introduced into the impregnation die | mm | 15 | 15 | 15 | 15 | 15 | 15 | 10 | 15 |
| Tensile force per one strand of reinforcing fiber bundle before being introduced into the impregnation die | cN | 1,000 | 600 | 400 | 1,000 | 600 | 400 | 1,000 | 1,000 |
| Void content | % by volume | 0.8 | 1.3 | 2.4 | 0.5 | 0.7 | 1.8 | 1.5 | 1.4 |
| Degree of dispersity of reinforcing fibers | | 0.27 | 0.21 | 0.23 | 0.24 | 0.27 | 0.30 | 0.40 | 0.41 |
| Coefficient of variation of thickness of tape-shaped prepreg | | A | A | A | A | A | A | B | B |
| Coefficient of variation of degree of dispersity in tape length direction | | A | A | A | A | A | A | A | B |
| Tensile strength | | A | A | A | A | A | A | A | B |

**[Table 2]**

| | | Example 9 | Example 10 | Example 11 | Example 12 | Comparative Example 1 | Comparative Example 2 | Comparative Example 3 |
|---|---|---|---|---|---|---|---|---|
| (A) Reinforcing fibers | | Carbon fibers | Carbon fibers | Carbon fibers | Carbon fibers | Carbon fibers | Carbon fibers | Carbon fibers |
| (B) Thermoplastic resin composition | | Polyamide 6 | Polyamide 6 | Polyamide 6 | Polyamide 6 | Polyamide 6 | Polyamide 6 | Polyamide 6 |
| Fiber Volume Content | % by volume | 50 | 50 | 50 | 50 | 50 | 50 | 50 |
| Average tape thickness | mm | 0.2 | 0.8 | 1.2 | 1.5 | 0.4 | 0.4 | 2.0 |
| Presence or absence of width regulating parts provided on fixed guides | | Present | Present | Present | Present | Absent | Absent | Absent |
| Width per one strand of reinforcing fiber bundle before being introduced into the impregnation die | mm | 15 | 15 | 15 | 15 | 5 | 5 | 15 |
| Tensile force per one strand of reinforcing fiber bundle before being introduced into the impregnation die | cN | 1,000 | 1,600 | 1,600 | 1,800 | 100 | 400 | 2,000 |
| Void content | % by volume | 0.3 | 2.7 | 4.6 | 4.1 | 4.0 | 3.6 | 5.5 |
| Degree of dispersity of reinforcing fibers | | 0.24 | 0.35 | 0.28 | 0.39 | 0.61 | 0.58 | 0.56 |
| Coefficient of variation of thickness of tape-shaped prepreg | | A | A | A | B | B | B | C |
| Coefficient of variation of degree of dispersity in tape length direction | | A | A | A | A | C | C | C |
| Tensile strength | | A | B | B | B | C | B | C |

### Reference Signs List

- 100: production apparatus
- 101: reinforcing fiber bundle
- 102: bobbin
- 103: tow pass guide
- 104: impregnation die
- 105: thermoplastic resin composition
- 106: feeder
- 107: fixed guide
- 108: calendar roll
- 109: pull roll
- 110: tape-shaped prepreg
- 111: winding role
- 112: width regulating part

## Claims

1. A tape-shaped prepreg comprising unidirectionally-oriented reinforcing fibers, and a thermoplastic resin composition,
wherein said tape-shaped prepreg has:
an average thickness of 0.2 mm or more and 1.5 mm or less;
a void content of 5% by volume or less, as measured according to the method in the description;
a degree of dispersity of reinforcing fibers of 0.5 or less, as measured according to the method in the description; and
a coefficient of variation (%) of said degree of dispersity of reinforcing fibers in the length direction of said tape-shaped prepreg is 5.0% or less, as measured according to the method in the description.

2. The tape-shaped prepreg according to claim 1, which has a fiber volume content of from 30 to 70% by volume.

3. The tape-shaped prepreg according to claim 1 or 2, which has a tensile strength as measured in accordance with ASTM D3039/ D3039-07 of from 1,500 to 3,500 MPa.

4. The tape-shaped prepreg according to any one of claims 1 to 3, wherein the coefficient of variation (%) of the thickness of said tape-shaped prepreg is 2.0% or less, as measured according to the method in the description.

5. The tape-shaped prepreg according to any one of claims 1 to 4, wherein said thermoplastic resin has a melt viscosity of 200 Pa s or less, at a temperature 50°C or more higher than the melting point of said thermoplastic resin, as measured according to the method in the description.

6. The tape-shaped prepreg according to any one of claims 1 to 5, wherein said reinforcing fibers are carbon fibers.

7. The tape-shaped prepreg according to any one of claims 1 to 6, wherein said thermoplastic resin composition is a polyamide resin composition.

8. A molded article formed using the tape-shaped prepreg of any one of claims 1 to 7 .

9. A method of producing a tape-shaped prepreg, said tape-shaped prepreg comprising unidirectionally-oriented reinforcing fibers, and a thermoplastic resin composition,
wherein a fixed guide(s) is/are provided in a die for impregnating said reinforcing fibers with said thermoplastic resin composition,
wherein at least a pair of projection parts are provided on each of the surface(s) of said fixed guide(s) above and/or under which said reinforcing fibers pass,
wherein the direction of a straight line having the shortest distance between said pair of projection parts, is substantially vertical to the direction of orientation of said reinforcing fibers, and
wherein the widening of said tape-shaped prepreg is restricted by defining the interval between said pair of projection parts.

## Patentansprüche

1. Bandförmiges Prepreg, das unidirektional ausgerichtete Verstärkungsfasern und eine thermoplastische Harzzusammensetzung umfasst,
wobei das bandförmige Prepreg Folgendes aufweist:
eine durchschnittliche Dicke von 0,2 mm oder mehr und 1,5 mm oder weniger;
einen Hohlraumgehalt von 5 Vol.-% oder weniger, gemessen nach dem Verfahren in der Beschreibung;
einen Dispersitätsgrad der Verstärkungsfasern von 0,5 oder weniger, gemessen nach dem Verfahren in der Beschreibung; und
einen Variationskoeffizienten (%) des Dispersitätsgrads der Verstärkungsfasern in Längsrichtung des bandförmigen Prepregs, der 5,0 % oder weniger beträgt, gemessen nach dem Verfahren in der Beschreibung.

2. Bandförmiges Prepreg nach Anspruch 1, das einen Faservolumengehalt von 30 bis 70 Vol.-% aufweist.

3. Bandförmiges Prepreg nach Anspruch 1 oder 2, das eine gemäß ASTM D3039/D3039-07 gemessene Zugfestigkeit von 1.500 bis 3.500 MPa aufweist.

4. Bandförmiges Prepreg nach einem der Ansprüche 1 bis 3, wobei der Variationskoeffizient (%) der Dicke des bandförmigen Prepregs 2,0 % oder weniger beträgt, gemessen nach dem Verfahren in der Beschreibung.

5. Bandförmiges Prepreg nach einem der Ansprüche 1 bis 4, wobei das thermoplastische Harz eine Schmelzviskosität von 200 Pa·s oder weniger bei einer Temperatur von 50 °C oder mehr über dem Schmelzpunkt des thermoplastischen Harzes aufweist, gemessen nach dem Verfahren in der Beschreibung.

6. Bandförmiges Prepreg nach einem der Ansprüche 1 bis 5, wobei die Verstärkungsfasern Kohlefasern sind.

7. Bandförmiges Prepreg nach einem der Ansprüche 1 bis 6, wobei die thermoplastische Harzzusammensetzung eine Polyamidharzzusammensetzung ist.

8. Formteil, das unter Verwendung eines bandförmigen Prepregs nach einem der Ansprüche 1 bis 7 gebildet wurde.

9. Verfahren zur Herstellung eines bandförmigen Prepregs, wobei das bandförmige Preprog unidirektional ausgerichtete Verstärkungsfasern und eine thermoplastische Harzzusammensetzung umfasst,
wobei eine oder mehrere fixe Führungen in einem Formwerkzeug bereitgestellt werden, um die Verstärkungsfasern mit der thermoplastischen Harzzusammensetzung zu imprägnieren,
wobei zumindest ein Paar von Vorsprungsteilen auf jeder der Oberflächen der einen oder mehreren fixen Führungen bereitgestellt ist, über und/oder unter dem die Verstärkungsfasern durchkommen,
wobei die Richtung einer geraden Linie mit dem kürzesten Abstand zwischen dem Paar von Vorsprungsteilen im Wesentlichen vertikal zur Richtung der Orientierung der Verstärkungsfasern ist und
wobei die Aufweitung des bandförmigen Prepregs durch Definieren des Abstands zwischen dem Paar von Vorsprungsteilen eingeschränkt wird.

## Revendications

1. Préimprégné sous forme de bande comprenant des fibres de renforcement à orientation unidirectionnelle, et une composition de résine thermoplastique,
**caractérisé en ce que** ledit préimprégné sous forme de bande présente :
une épaisseur moyenne de 0,2 mm ou plus et de 1,5 mm ou moins ;
un taux de vides de 5 % en volume ou moins, tel que mesuré selon le procédé de la description ;
un degré de dispersion des fibres de renforcement de 0,5 ou moins, tel que mesuré selon le procédé de la description ; et
un coefficient de variation (%) dudit degré de dispersion des fibres de renforcement dans la direction de la longueur dudit préimprégné sous forme de bande est de 5,0 % ou moins, tel que mesuré selon le procédé de la description.

2. Préimprégné sous forme de bande selon la revendication 1, qui présente une teneur volumique en fibres de 30 à 70 % en volume.

3. Préimprégné sous forme de bande selon la revendication 1 ou 2, qui présente une résistance à la traction telle que mesurée conformément à la norme ASTM D3039/D3039-07 de 1 500 à 3 500 MPa.

4. Préimprégné sous forme de bande selon l'une quelconque des revendications 1 à 3, dans lequel le coefficient de variation (%) de l'épaisseur dudit préimprégné sous forme de bande est de 2,0 % ou moins, tel que mesuré selon le procédé de la description.

5. Préimprégné sous forme de bande selon l'une quelconque des revendications 1 à 4, dans lequel ladite résine thermoplastique présente une viscosité à l'état fondu de 200 Pa ou moins, à une température de 50°C ou plus supérieure au point de fusion de ladite résine thermoplastique, telle que mesurée selon le procédé de la description.

6. Préimprégné sous forme de bande selon l'une quelconque des revendications 1 à 5, dans lequel lesdites fibres de renforcement sont des fibres de carbone.

7. Préimprégné sous forme de bande selon l'une quelconque des revendications 1 à 6, dans lequel ladite composition de résine thermoplastique est une composition de résine de polyamide.

8. Article moulé formé en utilisant le préimprégné sous forme de bande selon l'une quelconque des revendications 1 à 7.

9. Procédé de production d'un préimprégné sous forme de bande, ledit préimprégné sous forme de bande comprenant des fibres de renforcement à orientation unidirectionnelle, et une composition de résine thermoplastique,
dans lequel un ou des guides fixes sont prévus dans une filière pour imprégner lesdites fibres de renforcement avec ladite composition de résine thermoplastique,
dans lequel au moins une paire de parties saillantes est prévue sur chacune des surfaces dudit ou desdits guides fixes au-dessus et/ou au-dessous desquelles passent lesdites fibres de renforcement,
dans lequel la direction d'une ligne droite présentant la distance la plus courte entre ladite paire de parties saillantes est sensiblement verticale par rapport à la direction d'orientation desdites fibres de renforcement, et
dans lequel l'élargissement dudit préimprégné sous forme de bande est limité en définissant l'intervalle entre ladite paire de parties saillantes.
